# EUROPEAN PATENT SPECIFICATION

(11) **EP 2 843 126 B1**
(45) Date of publication and mention of the grant of the patent: **08.11.2017**
(21) Application number: 14183331.9
(22) Date of filing: 03.09.2014
(51) Int. Cl.: D06F 58/28, D06F 58/02, D06F 58/10, D06F 58/20, D06F 25/00, D06F 33/02, D06F 39/08

(54) **LAUNDRY TREATMENT APPARATUS AND CONTROL METHOD THEREOF**
WÄSCHEBEHANDLUNGSVORRICHTUNG UND STEUERVERFAHREN DAFÜR
APPAREIL DE TRAITEMENT DE LINGE ET SON PROCÉDÉ DE COMMANDE

(30) Priority: 03.09.2013 KR 20130105541; 03.09.2013 KR 20130105543; 03.09.2013 KR 20130105720; 03.09.2013 KR 20130105542
(43) Date of publication of application: 04.03.2015
(73) Proprietor: LG Electronics Inc., Seoul 150-721 (KR)
(72) Inventor: Kim, Taewan, Seoul 153-802 (KR); Lee, Gilnam, Seoul 153-802 (KR); Yoo, Sanghee, Seoul 153-802 (KR); Kim, Kwanghyun, Seoul 153-802 (KR)
(74) Representative: Hibbert, Juliet Jane Grace

(56) References cited:
- EP-A1- 2 116 647
- KR-A- 20120 040 380
- US-A1- 2012 174 631
- US-A1- 2013 219 734

## Description

This application claims the benefit of Korean Patent Application No. 10-2013-0105542 filed on September 3, 2013, Korean Patent Application No. 10-2013-0105541 filed on September 3, 2013, Korean Patent Application No. 10-2013-0105543 filed on September 3, 2013 and Korean Patent Application No. 10-2013-0105720 filed on September 3, 2013.

### BACKGROUND OF THE INVENTION

### Field of the Invention

The present disclosure relates to a laundry treatment apparatus and a control method thereof.

### Discussion of the Related Art

Laundry treatment apparatuses are electronic apparatuses that may implement washing and/or drying of a washing object (laundry). Examples of the laundry treatment apparatuses include a washing machine, a drying machine and a combined washing and drying machine.

Laundry treatment apparatuses that may function to dry laundry may be classified into laundry treatment apparatuses having an exhaust drying system and laundry treatment apparatuses having a circulation drying system according to how to treat heated air (hot air) supplied to laundry after heat exchange between the air and the laundry.

A circulation drying system is a system that condenses air discharged from a receiving space in which laundry is stored and thereafter heats the condensed air (i.e. heating after dehumidification) to resupply the air to the receiving space. An exhaust drying system is a system that continuously supplies hot air into the receiving space and discharges air subjected to heat exchange from the laundry treatment apparatus.

In the case of laundry treatment apparatuses having a circulation drying system, provision of a cooling water supply structure may be essential because it is necessary to dehumidify air discharged from the receiving space using cooling water prior to resupplying the air to the receiving space. Therefore, these laundry treatment apparatuses having a circulation drying system may cause consumption of an excessive quantity of cooling water when cooling efficiency is low.

On the other hand, laundry treatment apparatuses having an exhaust drying system may cause excessive energy consumption because they discharge air exchanged heat with laundry despite the fact that the air has a higher temperature than that of outside air.

EP2116647 discloses a method for drying laundry in a ventilation laundry dryer or washing/drying machine, wherein the laundry is dried in a drum where it is subjected to the action of an air flown that causes the water contained therein to evaporate, wherein a drying cycle comprises at least one closed circuit step, during which an air flow consisting of a single air mass makes several passages through the drum, at least one open circuit step, during which the air flow comprises an air mass taken in from the outer environment and then exhausted into the outer environment after having flowed through the drum once, and wherein the air is heated during the closed circuit step.

### SUMMARY OF THE INVENTION

Accordingly, the present disclosure is directed to a laundry treatment apparatus and a control method thereof that substantially obviate one or more problems due to limitations and disadvantages of the related art.

The present disclosure provides a laundry treatment apparatus having an advanced concept drying system which may reduce consumption of energy and cooling water required to dry laundry, and a control method thereof.

The present disclosure provides a laundry treatment apparatus having a drying system which may achieve enhanced drying efficiency, and a control method thereof.

The present disclosure provides a laundry treatment apparatus having a cooling water supply structure which may prevent cooling water from reaching laundry to be dried, and a control method thereof.

Additional advantages, objects, and features will be set forth in part in the description which follows and in part will become apparent to those having ordinary skill in the art upon examination of the following or may be learned from practice of the invention. Objectives and other advantages may be realized and attained by the structure particularly pointed out in the written description and claims hereof as well as the appended drawings.

These objects and other advantages, are solved by the invention according to the method of claim 1.

Time taken for the process of rotating the drum at the second RPM may be longer than time taken for the process of rotating the drum at the first RPM.

A ratio of time taken for the process of rotating the drum at the first RPM to time taken for the process of rotating the drum at the second RPM may be constant.

The control method of the laundry treatment apparatus further includes a cooling water supply operation for supplying water to cool an inner circumferential surface of the tub.

The control method of the laundry treatment apparatus may further include mode selection operation for selecting whether or not to implement the cooling water supply operation prior to initiation of the drying operation.

The cooling water supply operation for supplying water to cool the inner circumferential surface of the tub is implemented during the motion execution operation.

The cooling water supply operation may be implemented while the drum is rotated at the second RPM.

The cooling water supply operation may be implemented only while the drum is rotated at the second RPM.

The control method of the laundry treatment apparatus may further include mode selection operation for selecting whether or not to supply water required to cool an inner circumferential surface of the tub into the tub during implementation of the drying operation.

The motion execution operation may further include second motion to be implemented prior to execution of the first motion, and the second motion may include a process of rotating the drum at a third RPM, the third RPM being RPM at which the centrifugal force of laundry caused via rotation of the drum is greater than the weight of laundry, and a process of stopping rotation of the drum before the drum completes 1 revolution.

The process of stopping rotation of the drum may be initiated when laundry is raised above half a height of the drum or more.

The process of stopping rotation of the drum may be implemented when laundry is rotated by an angle of 90 degrees or more and less than 180 degrees on the basis of the lowermost point of the rotation track of the drum.

It is to be understood that both the foregoing general description and the following detailed description are exemplary and explanatory and are intended to provide further explanation of the invention as claimed.

Aspects of an invention are defined in the appended independent claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGs. 1 and 2 show a laundry treatment apparatus according to the present invention;
FIG. 3 shows a suction duct included in the laundry treatment apparatus according to the present invention;
FIG. 4 shows a flow path switchover unit included in the laundry treatment apparatus according to the present invention;
FIG. 5 shows a water supply unit and a water supply guide included in the laundry treatment apparatus according to the present invention;
FIG. 6 shows another embodiment of the laundry treatment apparatus according to the present invention;
FIG. 7 shows a control process of the laundry treatment apparatus according to the present invention; and
FIGs. 8 and 9 respectively show first motion and second motion.

### DETAILED DESCRIPTION OF THE INVENTION

Hereinafter, exemplarily embodiments of the present invention will be described in detail with reference to the accompanying drawings. Meanwhile, a configuration of an apparatus that will be described hereinafter and a control method of the apparatus are provided for explanation of the exemplarily embodiments of the present invention and are not intended to limit the technical scope of the present invention. The same reference numerals of the entire specification designate the same constituent elements.

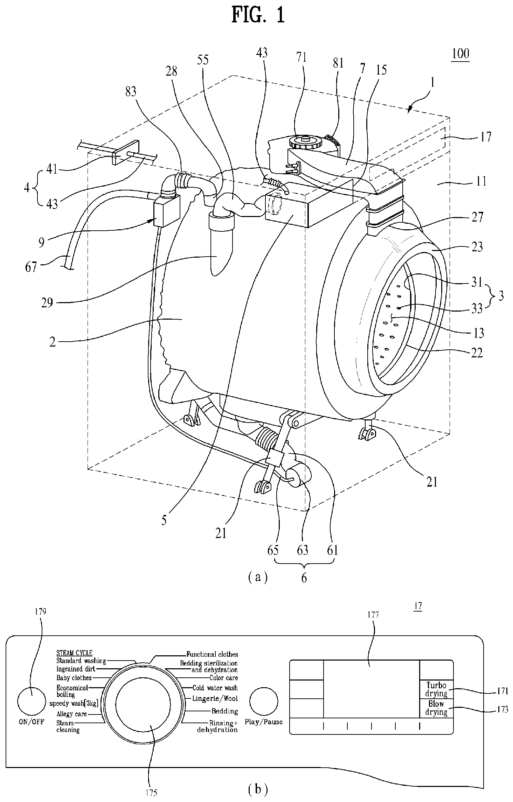

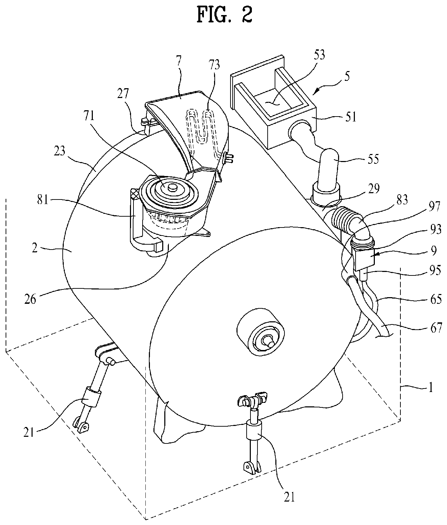

As exemplarily shown in FIGs. 1 and 2, a laundry treatment apparatus of the present invention, designated by reference numeral 100, includes a cabinet 1 defining an external appearance of the apparatus 100, laundry receptacles 2 and 3 placed within the cabinet 1 and configured to store a washing object (laundry) and wash water therein, a circulation duct 7 through which interior air of the laundry receptacles 2 and 3 is circulated, an exhaust duct 83 through which some of the interior air of the laundry receptacles 2 and 3 is discharged from the laundry receptacles 2 and 3, a suction duct 81 through which outside air is supplied into the laundry receptacles 2 and 3 and a heating unit configured to supply heated air into the laundry receptacles 2 and 3.

The cabinet 1 includes a front panel 11 defining a front surface of the laundry treatment apparatus 100. The front panel 11 is provided with an opening 13 through which laundry is introduced into or removed from the laundry receptacles 2 and 3.

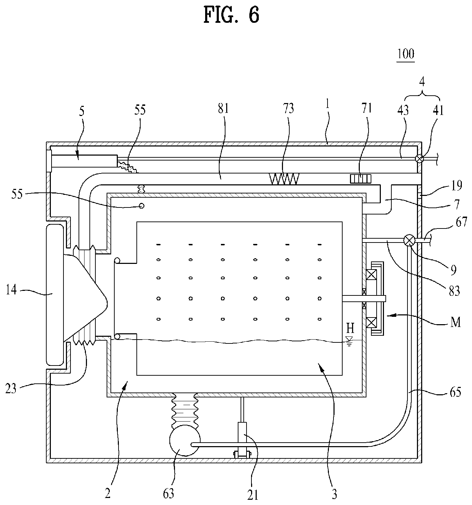

The opening 13 is opened or closed by a door 14 (see FIG. 6) rotatably coupled to the cabinet 1.

In addition, a control panel 17 may be mounted to the front panel 11. The control panel 17 serves as a user interface to enable information exchange between a user and a controller (not shown) of the laundry treatment apparatus 100.

More specifically, the control panel 17 includes a power input part 179 which assists the user in inputting a power supply instruction to the laundry treatment apparatus 100 and an input part 175 which assists the user in selecting a laundry treatment method that the laundry treatment apparatus 100 can provide.

The "laundry treatment method" selected via the input part 175 is a set of time-variant control instructions or time-invariant control instructions required to allow the controller (not shown) to control respective devices included in the laundry treatment apparatus 100 so as to supply moisture or air to laundry.

The "laundry treatment method" as described above is typically called a laundry treatment course, a control method of a laundry treatment apparatus or the like. A plurality of laundry treatment methods may be set in the laundry treatment apparatus 100.

In addition, the control panel 17 may further include a display part 177 which displays information regarding the laundry treatment method selected by the user or an operation procedure of the laundry treatment apparatus 100.

The "information regarding the operation procedure of the laundry treatment apparatus" displayed on the display part 177 includes the name of a laundry treatment method selected by the user via the input part 175, a set time for the selected laundry treatment method, a completion target time or remaining time of a laundry treatment method that is being executed, requirements that the laundry treatment apparatus 100 requests the user for execution of the laundry treatment method selected by the user and the like (i.e. information related to operation of the laundry treatment apparatus 100).

The laundry receptacles accommodated in the cabinet 1 may include a tub 2 in which wash water is stored and a drum 3 in which laundry is stored, the drum 3 being rotatably accommodated in the tub 2.

The tub 2 has a cylindrical shape and is fixed in the cabinet 1 via tub support members 21. The tub 2 has a tub opening 22 formed in a front surface thereof to communicate with the opening 13.

A gasket 23 is interposed between the tub opening 22 and the opening 13. The gasket 23 may serve not only to prevent vibration generated by the tub 2 from being transmitted to the cabinet 1, but also to prevent leakage of wash water stored in the tub 2. To this end, the gasket 23 may be formed of an elastic material, such as rubber.

The drum 3 is rotatably supported in the tub 2 via a drive unit (M, see FIG. 6) that is mounted to a rear surface of the tub 2. The drum 3 has a drum opening 31 communicating with the tub opening 22 and through-holes 33 perforated in the circumference of the drum 3.

The circulation duct 7 serves as a flow path through which interior air of the tub 2 is discharged from the tub 2 and then is again guided into the tub 2. The circulation duct 7 may be installed on the top of an outer circumferential surface of the tub 2.

To couple with the circulation duct 7, the tub 2 may have a first communication portion 26 and a second communication portion 27.

As exemplarily shown in FIG. 2, the first communication portion 26 serves as a flow path through which interior air of the tub 2 is guided to the circulation duct 7, and the second communication portion 27 serves as a flow path through which air introduced into the circulation duct 7 is guided to the tub 2.

The second communication portion 27 may be formed in the gasket 23. That is, the second communication portion 27 takes the form of an aperture formed in the gasket 23 and an air outlet of the circulation duct 7 may be fitted into the aperture formed in the gasket 23.

Although both the first communication portion 26 and the second communication portion 27 may be formed in the circumference of the tub 2, positioning the second communication portion 27 at the gasket 23 may guide air discharged from the circulation duct 7 to the center of the drum 3 through the drum opening 31, which may advantageously increase heat exchange efficiency between laundry and the air.

The heating unit, provided to supply heated air into the tub 2, may include a fan 71 and a heater 73 which are accommodated in the circulation duct 7. The fan 71 serves not only to move interior air of the tub 2 into the circulation duct 7 through the first communication portion 26, but also to move the air introduced into the circulation duct 7 to the second communication portion 27. The heater 73 serves to heat the air moved to the second communication portion 27 by the fan 71.

In this case, the first communication portion 26 and the second communication portion 27 may be located in a diagonal direction on the basis of a cross section of the tub 2 parallel to the ground on which the cabinet 1 is supported. The heater 73 may be located such that a portion of the heater 73 extends in a longitudinal direction of the circulation duct 7. Increase in the length of the flow path defined by the circulation duct 7 serves to achieve sufficient time required to heat air moving through the circulation duct 7.

In the laundry treatment apparatus 100 of the present invention, some of air to be supplied to the heater 73 is introduced through the suction duct 81 and some of hot air supplied into the tub 2 is discharged from the tub 2 through the exhaust duct 83.

The suction duct 81 may be located in a flow path along which interior air of the tub 2 is guided to the fan 71. This serves to allow interior air of the tub 2 as well as outside air of the tub 2 to be introduced into and circulated through the circulation duct 7 by the fan 71 installed in the circulation duct 7 without providing the suction duct 81 with an additional air introduction device.

FIG. 2 shows a case in which the suction duct 81 causes outside air of the tub 2 to be introduced into the circulation duct 7 through the first communication portion 26 by way of example. In this case, negative pressure is applied to the first communication portion 26 upon rotation of the fan 71, causing interior air of the tub 2 as well as outside air of the tub 2 to be introduced into the circulation duct 7.

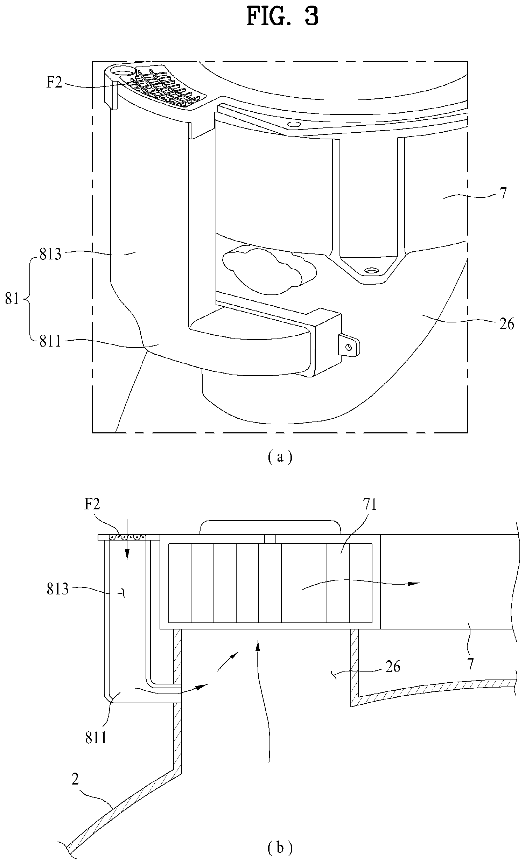

Meanwhile, as exemplarily shown in FIG. 3, the suction duct 81 according to the present invention does not require a control device (e.g., a valve) to control opening/closing of the suction duct 81. That is, the suction duct 81 according to the present invention may be continuously kept open.

The suction duct 81 may be comprised of a communication section 811 communicating with the first communication portion 26 and an extension section 813 extending from the coupling section 811 to the circulation duct 7. The extension section 813 may extend from the communication section 811 in a height direction of the tub 2 by a predetermined length (in other words, the extension section 813 may extend from the communication section 811 to the circulation duct 7). This serves to prevent bubbles generated by detergent during washing of laundry from being discharged from the tub 2 through the suction duct 81.

In addition, the suction duct 81 may further include a filter F2 which filters air to be introduced into the extension section 813. The filter F2 may be installed to the circulation duct 7 and the extension section 813 may be fixed at the filter F2. That is, the suction duct 81 according to the present invention has one end fixed to the tub 2 and the other end fixed to the circulation duct 7.

This configuration is achieved as the circulation duct 7 is fixed at the top of the outer circumferential surface of the tub 2. Considering the laundry treatment apparatus 100 in terms of a vibration system, the circulation duct 7 and the tub 2 will exhibit almost the same vibration and, therefore, the vibration has no effect on the durability of the suction duct 81 installed to interconnect the tub 2 and the circulation duct 7.

Assuming a configuration in which the circulation duct 7 is fixed at the cabinet 1 rather than being fixed at the top of the outer circumferential surface of the tub 2, the circulation duct 7 will vibrate irrespective of vibration of the tub 2, which makes it difficult to maintain durability of the suction duct 81 without an additional vibration absorbing device.

The exhaust duct 83 may be installed at any position of the tub 2 so long as it can discharge some of air introduced into the tub 2 through the circulation duct 7 to the outside of the tub 2.

FIG. 1 shows a case in which the exhaust duct 83 is installed to a third communication portion 28 formed at an upper position of the circumference of the tub 2 by way of example. When air is suctioned into the tub 2 by the fan 71, the interior of the tub 2 becomes a positive pressure state, causing some of the interior air of the tub 2 to be discharged to the outside of the tub 2 having atmospheric pressure through the exhaust duct 83 and the remaining interior air of the tub 2 to move into the circulation duct 7 through the first communication portion 26 having negative pressure.

To allow only some of air, supplied into the tub 2 through the circulation duct 7, to be discharged through the exhaust duct 83, the cross sectional area of the exhaust duct 83 may be less than the cross sectional area of the first communication portion 26 (or the cross sectional area of the circulation duct 7).

Meanwhile, to maintain a constant flow rate of air to be supplied into the tub 2, the flow rate of air that can be discharged from the exhaust duct 83 (exhaustion capacity) may be equal or similar to the flow rate of air that can be suctioned into the suction duct 81 (suction capacity).

Although the exhaust duct 83 may be configured to communicate the interior of the tub 2 with the outside of the cabinet 1 so as to guide air introduced through the exhaust duct 83 to the outside of the cabinet 1, the exhaust duct 83 may be connected to a drain unit 6 that serves to discharge wash water from the tub 2.

When the exhaust duct 83 is in direct communication with the outside of the cabinet 1, air discharged from the exhaust duct 83 may be condensed on an indoor wall because the air discharged through the exhaust duct 83 is humid air.

The laundry treatment apparatus 100 of the present invention may solve the problem as described above by connecting the exhaust duct 83 to the drain unit 6 that is included to discharge wash water in the tub 2 to the outside of the cabinet 1.

In this case, a flow path switchover unit 9 may be installed at a junction of the exhaust duct 83 and the drain unit 6 to control opening/closing of the exhaust duct 83 and the drain unit 6. This serves to prevent air discharged through the exhaust duct 83 from entering the tub 2 and to prevent water discharged through the drain unit 6 from entering the tub 2.

The drain unit 6 according to the present invention may include a first drain flow path 61 and a pump 63 which serve to discharge wash water from the tub 2, a second drain flow path 65 through which the wash water having passed through the pump 63 is guided to the flow path switchover unit 9 and a third drain flow path 67 through which water directed to the flow path switchover unit 9 is guided to an outdoor location (not shown), such as a drain.

The flow path switchover unit 9 installed at the junction of the exhaust duct 83 and the drain unit 6 may be located higher than the set maximum water level (H, see FIG. 6) of the tub 2.

Conventional laundry treatment apparatuses generally include a structure (hereinafter referred to as water trap) to prevent water in a flow path connected to the outdoor location (i.e. the aforementioned third drain flow path) from being completely discharged, in order to prevent bad smell from entering the laundry treatment apparatus through the third drain flow path.

In a case in which the exhaust duct 83 according to the present invention is connected to the drain unit provided with the water trap, interior air of the tub 2 cannot be discharged from the tub 2 through the exhaust duct 83 during drying of laundry. Therefore, under connection of the exhaust duct 83 to the drain unit of conventional laundry treatment apparatuses, a controller needs to control revolutions per minute of the fan to blow air at pressure sufficient for removal of the water trap.

However, in a case in which the flow path switchover unit 9 is located higher than the set maximum water level of the tub 2 according to the present invention, the exhaust duct 83 serves as an anti-siphon member to create a water trap between the flow path switchover unit 9 and the pump 63 (in the second drain flow path 65), thereby preventing bad smell from entering the tub 2.

In addition, air introduced into the exhaust duct 83 may be discharged from the tub 2 through the flow path switchover unit 9 and the third drain flow path 67, and therefore it is unnecessary to control revolutions per minute of the fan 71 for removal of the water trap.

In addition, through the configuration as described above, even if wash water is supplied to the set maximum water level of the tub 2, it is possible to prevent wash water from being unintentionally discharged from the tub 2 through the drain unit 6.

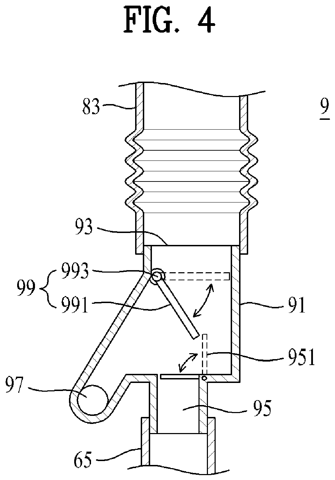

The flow path switchover unit 9 according to the present invention may have a shape as exemplarily shown in FIG. 4.

The flow path switchover unit 9 may include a switchover unit body 91 located at a junction of the exhaust duct 83 and the second drain flow path 65, a duct connection pipe 93 connecting the exhaust duct 83 and the switchover unit body 91 to each other, a flow path connection pipe 95 connecting the second drain flow path 65 and the switchover unit body 91 to each other, and a discharge pipe 97 connecting the third drain flow path 67 and the switchover unit body 91 to each other.

The duct connection pipe 93 and the flow path connection pipe 95 may be arranged to face each other. The duct connection pipe 93 may be located at the top of the switchover unit body 91 and the flow path connection pipe 95 may be located at the bottom of the switchover unit body 91.

In this case, a switchover valve 99 to open or close the duct connection pipe 93 is received in the switchover unit body 91. The switchover valve 99 includes a valve body 991 configured to open or close the duct connection pipe 93 and a valve rotating shaft 993 configured to rotatably couple the valve body 991 to the switchover unit body 91.

The valve body 991 keeps the duct connection pipe 93 open by the weight thereof, but the duct connection pipe 93 is closed by water pressure when wash water is introduced into the switchover unit body 91 through the second drain flow path 65.

Meanwhile, the flow path switchover unit 9 having the configuration as described above may prevent wash water discharged from the tub 2 from entering the tub 2 through the duct connection pipe 93, but may not eliminate the possibility of air discharged from the tub 2 being resupplied to the tub 2 through the flow path connection pipe 95.

As described above, owing to the water trap created in the second drain flow path 65, the present invention may prevent air discharged through the exhaust duct 83 from entering the tub 2. However, the water trap may not be created in the second drain flow path 65 when no discharge of wash water ever happens before drying of laundry.

Accordingly, the flow path switchover unit 9 according to the present invention may further include a flow path valve 951 to open or close the flow path connection pipe 95. The flow path valve 951 may include a check valve which opens the flow path connection pipe 95 only when wash water is introduced into the switchover unit body 91 through the second drain flow path 65.

As exemplarily shown in FIGs. 1 and 2, the laundry treatment apparatus 100 of the present invention may further include a water supply unit 4 which supplies wash water into the tub 2 and a detergent supply unit 5 which supplies detergent into the tub 2.

The water supply unit 4 may include a water supply flow path 43 which connects the tub 2 and the water supply source (not shown) at the outside of the laundry treatment apparatus 100 to each other and a water supply valve 41 which opens or closes the water supply flow path 43 under control of the controller (not shown).

Meanwhile, the detergent supply unit 5 may include a detergent reservoir 53 in which detergent is stored and a tub supply pipe 55 which connects the detergent reservoir 53 and the tub 2 to each other. The water supply flow path 43 may have any shape so long as it can supply water to the detergent reservoir 53. In this case, detergent stored in the detergent reservoir 53 and water required for laundry washing may be supplied into the tub 2 as soon as the controller (not shown) opens the water supply valve 41.

Meanwhile, the detergent reservoir 53 may be withdrawn from the front panel 11. To this end, the detergent supply unit 5 may include a body 51 configured to support the detergent reservoir 53 such that the detergent reservoir 53 may be withdrawn from the front panel 11. The front panel 11 has a reservoir opening 15 through which the detergent reservoir 53 is withdrawn.

In this case, the interior of the detergent reservoir 53 must communicate with the body 51 and the tub supply pipe 55 must be configured to enable communication between the body 51 and the interior of the tub 2.

The controller (not shown) may control the water supply unit 4 to allow the water supply unit 4 to supply water required to cool the tub 2 (required to condense interior air of the tub 2) into the tub 2 (for enhancement of drying efficiency).

In consideration of the fact that humid interior air of the tub 2 may be condensed in the detergent supply unit 5 and supplying water into the tub 2 during drying of laundry may unintentionally cause laundry stored in the drum 3 to be wet, the laundry treatment apparatus 100 of the present invention may further include a water supply guide 25 for communication between the tub supply pipe 55 and the tub 2.

The water supply guide 25 according to the present invention has a feature of defining a water trap (of continuously storing a constant amount of water to prevent communication between the tub 2 and the detergent supply unit 5), so as to prevent interior air of the tub 2 from entering the detergent supply unit 5 and to cause water supplied into the tub 2 via the water supply unit 4 to move to the bottom of the tub 2 along an inner circumferential surface of the tub 2 so as not to reach laundry stored in the drum 3.

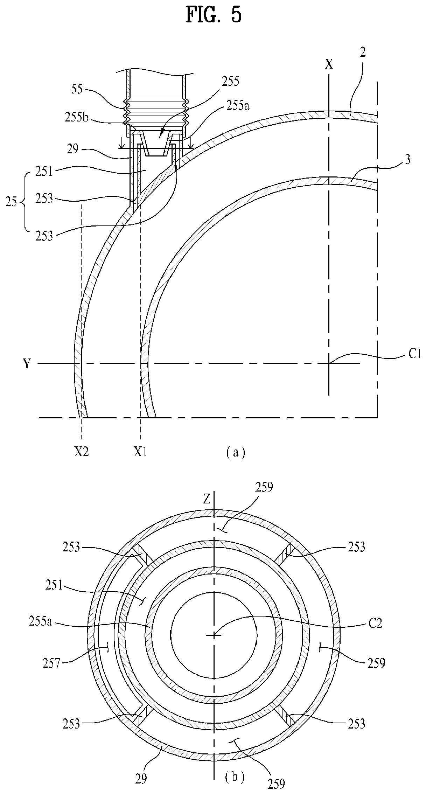

As exemplarily shown in FIG. 5, the water supply guide 25 may be formed in a fourth communication portion 29 located at an upper position of the circumference of the tub 2.

The fourth communication portion 29, as exemplarily shown in the drawing, may take the form of a pipe protruding from the circumference of the tub 2, or may take the form of an aperture perforated in the circumference of the tub 2.

The water supply guide 25 includes a trap body 251 which is accommodated in the fourth communication portion 29 to provide a water storage space, shims 253 which serve to maintain a constant gap between an outer circumferential surface of the trap body 251 and an inner circumferential surface of the fourth communication portion 29 and a guide pipe 255 which is fixed to the fourth communication portion 29 to guide water supplied through the tub supply pipe 55 into the trap body 251.

The guide pipe 255 may include a guide pipe body 255a configured to guide water into the trap body 251 and a flange 255b formed at the circumference of the guide pipe body 255a to fix the guide pipe body 255a to the fourth communication portion 29.

A diameter of the guide pipe body 255a is determined such that an outer circumferential surface of the guide pipe body 255a is spaced apart from an inner circumferential surface of the trap body 251 by a predetermined distance. A length of the guide pipe body 255a is determined such that the bottom of the guide pipe body 255a, from which water is discharged, is spaced apart from the bottom of the trap body 251 by a predetermined distance.

The flange 255b must be configured to clog a space between the outer circumferential surface of the guide pipe body 255a and the inner circumferential surface of the fourth communication portion 29. As exemplarily shown in FIG. 5, the flange 255b may be supported by an upper surface of the fourth communication portion 29.

Accordingly, water supplied into the detergent reservoir 53 through the water supply flow path 43 is supplied into the trap body 251 through the tub supply pipe 55 and the guide pipe body 255a and, in turn, the water supplied into the trap body 251 is introduced into the tub 2 through a space between the inner circumferential surface of the trap body 251 and the outer circumferential surface of the guide pipe body 255a and a space between the outer circumferential surface of the trap body 251 and the inner circumferential surface of the fourth communication portion 29.

A constant amount of water is always stored in the trap body 251 and the bottom of the guide pipe body 255a (not provided with the flange 255b) is continuously immersed in the water stored in the trap body 251, which prevents humid air within the tub 2 from being supplied into the detergent supply unit 5.

In addition, the water supply guide 25 as described above is located in the fourth communication portion 29 at a position spaced apart from a vertical line X passing a rotation center C1 of the drum 3 in a width direction Y of the tub 2 by a predetermined distance. As such, the water supply guide 25 may function to prevent water supplied into the tub 2 during drying from reaching laundry stored in the drum 3.

Moreover, the effects as described above may be maximized by positioning the fourth communication portion 29 such that the water supply guide 25 is located between a vertical line X1 as a tangent in relation to the circumference of the drum 3 and a vertical line X2 as a tangent in relation to the circumference of the tub 2 in a height direction of the tub 2.

Meanwhile, in a case in which positioning the water supply guide 25 at the above-described position is difficult, a flow path defined in the water supply guide 25 may be positioned at the above-described position to achieve the effects as described above.

As exemplarily shown in (b) of FIG. 5, the plural shims 253 may be arranged on the outer circumferential surface of the trap body 251 to fix the trap body 251 to the fourth communication portion 29. Space between the respective two neighboring shims 253 serve as flow paths through which water inside the trap body 251 is introduced into the tub 2.

Accordingly, when some of the spaces between the respective neighboring shims 253 have closed planes 259 and the other spaces have open planes 257 and each open plane 257 is located between the vertical line X1 as a tangent in relation to the circumference of the drum 3 and the vertical line X2 as a tangent in relation to the circumference of the tub 2, it is possible to prevent water supplied into the tub 2 during drying from reaching laundry.

That is, the open plane 257 may take the form of a semicircle or arc located farther away from the vertical line X passing the rotation center C1 of the drum 3 on the basis of a line Z that passes a center C2 of the fourth communication portion 29 and is parallel to the longitudinal direction of the tub 2.

When the open plane 257 has an arc shape, the length of the open plane 257 may be a quarter of the perimeter of the trap body 251 or more and less than the perimeter of the trap body 251. When viewed in terms of angle, the center of the arc-shaped open plane 257 may be 45 degrees or more and less than 180 degrees on the basis of the center C2 of the fourth communication portion 29.

The shape and positional features of the open plane 257 as described above are given to prevent water supplied during drying from reaching laundry and to minimize increase of a water supply time during washing.

Hereinafter, a drying system (a process of drying laundry by supplying heated air to the laundry) realized by the laundry treatment apparatus 100 of the present invention as described above will be described with reference to FIG. 2.

When the fan 71 is operated, interior air of the tub 2 is introduced into the circulation duct 7 through the first communication portion 26 and, in turn, the air introduced into the circulation duct 7 is heated by the heater 73 and thereafter supplied into the tub 2 through the second communication portion 27. The air supplied into the tub 2 undergoes heat exchange with laundry stored in the drum 3 and thereafter moves to the first communication portion 26.

The surface of the tub 2 is kept at a lower temperature than that at the center of the tub 2 because of heat exchange between the tub 2 and interior air of the cabinet 1 (or air introduced into the cabinet 1 through a cabinet opening 19, for example). Accordingly, as air discharged from the drum 3 is cooled while moving to the first communication portion 26, some of moisture contained in the air is condensed at the inner circumferential surface of the tub 2.

Accordingly, the tub 2, the circulation duct 7, the fan 71 and the heater 73 according to the present invention constitute a circulation drying system (including a first heat exchange flow path and the heating unit) that implements dehumidification of air discharged from the tub 2, heating of the dehumidified air and resupply of the heated air to the tub 2.

Meanwhile, some of the air exchanged heat with the laundry is discharged from the tub 2 through the exhaust duct 83 and the remaining air is collected into the circulation duct 7 through the first communication portion 26. In this process, the air is mixed with outside air introduced into the tub 2 through the suction duct 81.

Although the air discharged from the drum 3 is dehumidified via heat exchange with the tub 2 while moving to the first communication portion 26, the air collected in the circulation duct 7 may have difficulty in remaining in a sufficiently dehumidified state according to the quantity of laundry (i.e. the quantity of laundry stored in the drum 3). The exhaust duct 83 and the suction duct 81 serve to solve this problem.

That is, according to the present invention, some of air introduced into the first communication portion 26 is discharged from the cabinet 1 through the exhaust duct 83, which may reduce the quantity of humid air to be introduced into the circulation duct 7. In addition, dry air (outside air of the tub 2) supplied through the suction duct 81 is mixed with air moved from the tub 2 to the circulation duct 7, which may reduce the humidity of air to be directed to the heater 73 to a desired level.

The suction duct 81, the fan 71, the heater 73 and the exhaust duct 83 according to the present invention constitute an exhaust drying system (including a second heat exchange flow path and the heating unit) that serves not only to heat outside air of the tub 2 so as to supply the heated air into the tub 2, but also to discharge some of air exchanged heat with laundry from the tub 2.

Accordingly, owing to a combined drying system of the circulation drying system and the exhaust drying system, the present invention may prevent deterioration of drying efficiency regardless of the quantity of laundry or the kind of laundry (regardless of the humidity of air discharged from the tub 2).

To achieve the effects as described above, the exhaust duct 83 and the suction duct 81 may always remain in an open state during drying and the quantity of air introduced into the circulation duct 7 through the suction duct 81 (suction capacity) and the quantity of air discharged from the tub 2 through the exhaust duct 83 (exhaust capacity) may be equal to each other.

Meanwhile, the exhaust capacity may be set to be greater than the suction capacity when coincidence of the suction capacity and the exhaust capacity is difficult, although coincidence of the suction capacity and the exhaust capacity provides maximum drying efficiency.

When the suction capacity is greater than the exhaust capacity, this increases the quantity of hot air supplied into the tub 2 and, in turn, increase in the quantity of hot air supplied into the tub 2 means increase in the quantity of air to be dehumidified in the tub 2. Thus, when the suction duct 81 and the exhaust duct 83 are configured such that the suction capacity is greater than the exhaust capacity, drying laundry without using cooling water may cause deterioration of drying efficiency. Accordingly, the exhaust capacity may be set to be greater than the suction capacity.

Although the drying system as described above has a risk of increasing drying time according to the quantity of laundry, the present invention has solved this problem via control of the water supply unit 4. That is, the drying system according to the present invention may solve the above-described risk as the controller (not shown) controls the water supply unit 4 so as to supply water to the inner circumferential surface of the tub 2 during drying of laundry.

This is because supplying water via the water supply unit 4 to the inner circumferential surface of the tub 2 during drying causes rapid cooling of the inner circumferential surface of the tub 2, which may allow air introduced into the circulation duct 7 to remain at a low humidity (in other words, may allow air introduced into the circulation duct 7 to remain at high dryness).

The water supplied into the tub 2 via the water supply unit 4 moves to the drain unit 6 along the inner circumferential surface of the tub 2 under guidance of the water supply guide 25 and, therefore, there is substantially less risk of the water reaching laundry stored in the drum 3 thus causing increased drying time.

Meanwhile, to conserve water, supplying water into the tub 2 via the water supply unit 4 is implemented according to user selection. To this end, the control panel 17 may further include a first mode selection part 171 for drying of laundry via supply of water into the tub 2 and a second mode selection part 173 for drying of laundry without supply of water into the tub 2 (see (b) of FIG. 1).

Meanwhile, the laundry treatment apparatus 100 of the present invention as described above may have a configuration as exemplarily shown in FIG. 6.

The laundry treatment apparatus 100 as exemplarily shown in FIG. 6 has substantially the same configuration as the laundry treatment apparatus as exemplarily shown in FIGs. 1 to 5 except for a connection relationship between the circulation duct 7, the suction duct 81 and the exhaust duct 83.

More specifically, according to the present embodiment, the tub 2 receives outside air (interior air of the cabinet 1 or outside air of the cabinet 1) through the suction duct 81, interior air of the tub 2 is discharged from the exhaust duct 83, and some of the interior air of the tub 2 is guided to the suction duct 81 through the circulation duct 7 (connection duct).

The fan 71 and the heater 73 are accommodated in the suction duct 81, and the circulation duct 7 is connected to a flow path of the suction duct 81 through which air is guided to the fan 71 (i.e. the circulation duct is connected between the fan 71 and an inlet of the suction duct 81).

In the present embodiment, similarly, the circulation drying system is defined by a first heat exchange flow path and the heating unit 71 and 73. The first heat exchange flow path is constructed by the tub 2, the circulation duct 7 (connection duct) and a partial flow path of the suction duct 81 through which air having passed through the fan 71 is guided into the tub 2.

Meanwhile, in the present embodiment, the exhaust drying system is defined by a second heat exchange flow path and the heating unit 71 and 73, and the second heat exchange flow path is constructed by the suction duct 81, the tub 2 and the exhaust duct 83.

Accordingly, the present embodiment may also have the same effects as those of the above embodiment described with reference to FIGs. 1 to 5.

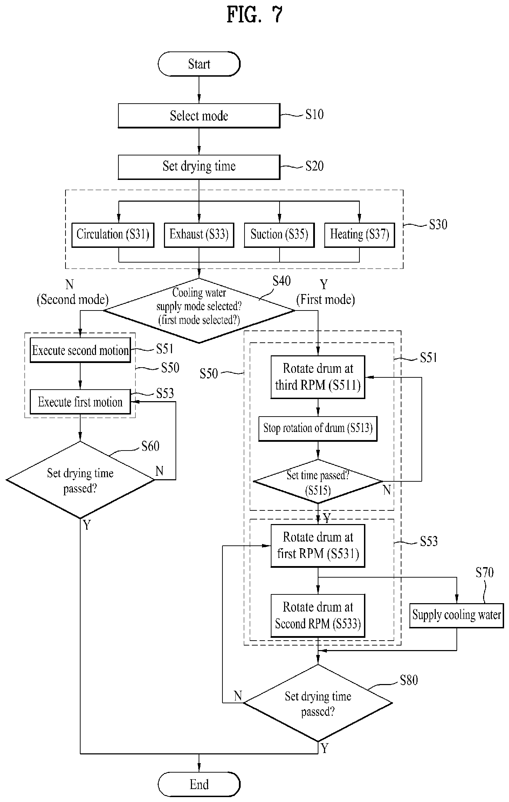

FIG. 7 shows a control method of the laundry treatment apparatus 100 as described above. The control method of the laundry treatment apparatus 100 according to the present invention may include drying operation S30 for supplying heated air into the tub 2 and motion execution operation S50 for rotating the drum 3 based on predetermined motion during implementation of the drying operation S30.

The drying operation S30 includes a circulation process S31 for discharging interior air of the tub 2 from the tub 2 and thereafter resupplying the air to the tub 2, an exhaust process S33 for discharging some of the air supplied into the tub 2 from the tub 2, a suction process S35 for mixing circulated air via the circulation process S31 with outside air of the tub 2 and a heating process S37 for heating the air to be supplied into the tub 2.

The circulation process S31 is a process in which interior air of the tub 2 moves through the circulation duct 7 via operation of the fan 71. The circulation process S31 is initiated simultaneously with operation of the fan 71. During the circulation process S31, only some of the interior air of the tub 2 is introduced into the circulation duct 7. That is, some of the interior air of the tub 2 is resupplied to the tub 2 via the circulation process S31 and some of the interior air of the tub 2 is discharged from the tub 2 via the exhaust process S33.

The exhaust process S33 is implemented using the exhaust duct 83 and, therefore, air discharged from the tub 2 via the exhaust process S33 moves to the outside of the laundry treatment apparatus 100 through the flow path switching unit 9 and the third drain flow path 67.

The suction process S35 is implemented using the suction duct 81 and the suction duct 81 is installed to the first communication portion 26 that connects the circulation duct 7 and the tub 2 to each other. Therefore, it will be appreciated that the suction process S35 is initiated when the circulation process S31 is initiated by operation of the fan 71.

The heating process S37 is a process of heating mixed air in the circulation duct 7 using the heater 73, the mixed air being acquired via the circulation process S31 and the suction process S35.

Through the drying operation S30 as described above, the present invention may implement supply of heated air, dehumidification of air exchanged heat with laundry, re-heating of some of air discharged from the tub, exhaust of some of air discharged from the tub and supply of reheated air to laundry.

The motion execution operation S50 is implemented during the drying operation S30. The motion execution operation S50 may be implemented to execute any one of first motion and second motion, or a first motion execution process S53 and a second motion execution process S51 may be implemented in a preset sequence.

The first motion execution process S53 is a process of rotating the drum 3 based on first motion. The first motion is motion in which the drum 3 is rotated in any direction among a clockwise direction and a counterclockwise direction to cause laundry to repeatedly come into close contact with and be separated from the inner circumferential surface of the drum 3 (without tumbling), thereby achieving enhanced heat exchange efficiency between the laundry and hot air supplied into the tub 2.

The first motion execution process S53 may include a process of rotating the drum 3 at first Revolutions Per Minute (RPM) (reference RPM) (S531), the first RPM being RPM at which the centrifugal force of laundry caused via rotation of the drum 3 becomes greater than the weight of laundry, a process of rotating the drum 3 at second RPM (S533), the second RPM being set to be greater than the first RPM, and a process of repeating the two processes S531 and S533 a predetermined number of times or for a predetermined time.

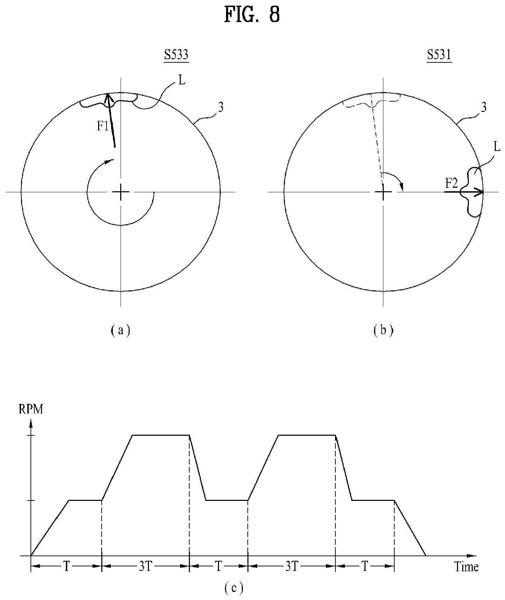

In the process of rotating the drum 3 at the first RPM S531 and in the process of rotating the drum 3 at the second RPM S533, the drum 3 is rotated in the same direction and the first RPM and the second RPM are RPMs that cause laundry to be rotated along with the drum 3. Therefore, during the first motion execution process S53, laundry will exhibit movement as exemplarily shown in FIG. 8.

That is, when the drum 3 is rotated at the first RPM, laundry L remains in close contact with the inner circumferential surface of the drum 3 for a given time ((b) of FIG. 8). When the drum 3 is rotated at the second RPM, the laundry L remains in close contact with the inner circumferential surface of the drum 3 for a given time, but comes into closer contact with the inner circumferential surface of the drum 3 than when the drum 3 is rotated at the first RPM ((a) of FIG. 8).

This is because the second RPM is greater than the first RPM and, therefore, the centrifugal force of laundry L caused when the drum 3 is rotated at the second RPM is greater than the centrifugal force of laundry L caused when the drum 3 is rotated at the first RPM.

The reason for setting the first RPM and the second RPM to values that cause the laundry L to come into close contact with the inner circumferential surface of the drum 3 so as to be rotated along with the drum 3 is to attain a space for movement of hot air within the drum 3. Through this first motion, the surface area of laundry L that may come into contact with hot air supplied into the tub 2 is maximized, which may increase heat exchange efficiency between the laundry L and the hot air supplied into the tub 2.

Meanwhile, the reason for setting the first RPM and the second RPM to different values is to allow the through-holes 33 of the drum 3 to be opened and closed by the laundry L. That is, this serves to confine hot air in the drum 3 while the drum 3 is rotated at the second RPM and to discharge interior air of the drum 3 into the tub 2 while the drum 3 is rotated at the first RPM.

In the case of conventional laundry treatment apparatuses, some of hot air introduced into the drum 3 is discharged to the tub 2 after undergoing heat exchange with laundry, but some of the air introduced into the drum 3 is directly discharged to the tub 2 through the through-holes 33 of the drum 3 without heat exchange with laundry. Therefore, the conventional laundry treatment apparatuses suffer from increased energy consumption due to low heat exchange efficiency between hot air and laundry.

The present invention may solve the above problem of the conventional laundry treatment apparatuses by controlling the RPM of the drum 3.

A given quantity of laundry or more will be distributed to cover the entire inner circumferential surface of the drum 3 and come into close contact with the inner circumferential surface of the drum 3 by high centrifugal force when the drum 3 is rotated at the second RPM. Therefore, rotating the drum 3 at the second RPM may minimize discharge of hot air from drum 3 to the tub 2 through the through-holes 33.

In addition, when the drum 1 is rotated at the first RPM, laundry will remain in close contact with the inner circumferential surface of the drum 3 by relatively low centrifugal force and, therefore, hot air may be discharged from the drum 3 to the tub 2 through the through-holes 33.

Time, which is set for the process of rotating the drum 3 at the second RPM S533 to further enhance heat exchange efficiency between laundry and hot air, may be longer than time set for the process of rotating the drum 3 at the first RPM S531.

Since condensation efficiency of air moving to the circulation duct 7 may vary according to a discharge time of hot air from the drum 3 to the tub 2 (i.e. the quantity of hot air discharged to the tub 2), time for rotation of the drum 3 at the first RPM and time for rotation of the drum 3 at the second RPM are set to a given ratio. FIG. 8 shows a case in which a ratio of the time for rotation of the drum 3 at the first RPM to the time for rotation of the drum 3 at the second RPM is 1:3 by way of example.

Meanwhile, the second motion execution process S51 is a process of rotating the drum 3 based on second motion. The second motion is motion in which rotation and rotation stop of the drum 3 are repeated to cause the laundry L to fall from above a horizontal line Y passing the rotation center C1 of the drum 3 (i.e. motion to facilitate agitation of laundry and to increase heat exchange efficiency).

As exemplarily shown in FIG. 7, the second motion execution process S51 may include a process of rotating the drum 3 at third RPM (S511), a process of stopping rotation of the drum 3 before the drum 3 completes 1 revolution (S513) and a process of repeating the two processes S511 and S513 a predetermined number of times or for a predetermined time (S515).

The third RPM is RPM at which the centrifugal force of laundry caused via rotation of the drum 3 becomes greater than the weight of laundry. The third RPM may be equal to any one of the first RPM or the second RPM.

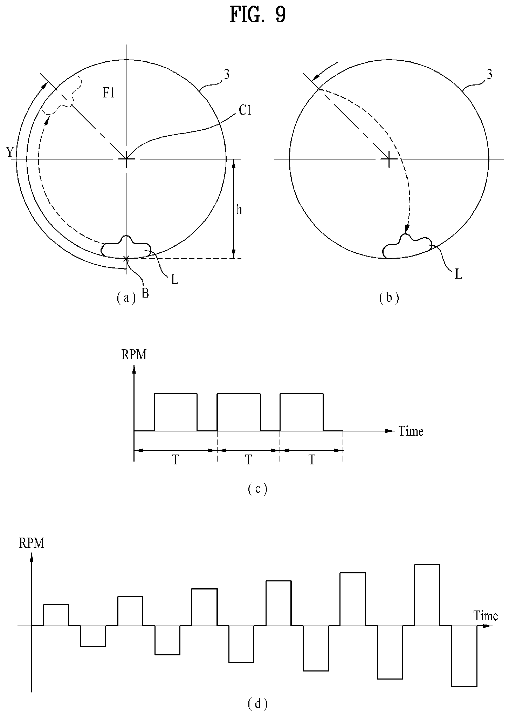

The process of stopping rotation of the drum 3 S513 is initiated when laundry is raised above half the height h of the drum 3. Thus, during implementation of the second motion execution process S51, laundry will exhibit movement as exemplarily shown in FIG. 9.

That is, when the drum 3 is rotated at the third RPM (S511), the laundry L is rotated along with the drum 3 while coming into close contact with the inner circumferential surface of the drum 3 ((a) of FIG. 9). Upon rotation stop of the drum 3 when the laundry L is raised above half the height h of the drum 3, the laundry L falls from above the horizontal line Y to the inner circumferential surface of the drum 3 below the horizontal line Y ((b) of FIG. 9).

Through this second motion, the surface area of laundry L exposed to hot air supplied into the drum 3 is increased and moisture contained in the laundry L is easily separated when the laundry L collides with the inner circumferential surface of the drum 3. In this way, the present invention may achieve increased heat exchange efficiency between hot air and laundry (increased drying efficiency).

In addition, the second motion prevents the laundry L from becoming entangled in the drum 3 because the laundry L is repeatedly raised and drops in the drum 3.

To maximize the effects as described above, the process of stopping rotation of the drum 3 S513 may be implemented by applying torque to the drum 3 in a direction opposite to a rotating direction of the drum 3 (i.e. a rotating direction of the drum 3 at a point in time when the process of stopping rotation of the drum 3 S513 is initiated. This serves to provide the laundry L with greater shock force.

In addition, the process of stopping rotation of the drum 3 S513 may be implemented when the laundry L is rotated by an angle of 90 degrees or more and less than 180 degrees on the basis of the lowermost point B of the rotation track of the drum 3.

The second motion as described above may be set to allow the drum 3 to be rotated in any one direction among a clockwise direction and a counterclockwise direction as exemplarily shown in (c) of FIG. 9, and may be set to allow the drum 3 to alternately implement clockwise rotation and counterclockwise rotation as exemplarily shown in (d) of FIG. 9.

The process of rotating the drum 3 at the third RPM S511 and the process of stopping rotation of the drum 3 S513 are repeated a predetermined number of times or for a predetermined time. The third RPM may be gradually increased whenever the second motion is repeated.

That is, assuming that the second motion is implemented plural times, RPM for initial execution of second motion may be less than RPM for subsequent execution of second motion (see (d) of FIG. 9).

In addition, the third RPM set for the process of rotating the drum 3 S511 may be increased whenever the second motion is repeated and then reduced after the second motion is repeated a predetermined number of times.

Gradually increasing the third RPM whenever the second motion is repeatedly executed may ensure easy removal of moisture contained in laundry.

Meanwhile, the second motion execution process S51 as described above may be implemented before the first motion execution process S53. This serves to prevent laundry from becoming entangled in the drum 3 via the second motion, thereby allowing the laundry to be uniformly distributed at the inner circumferential surface of the drum 3 during execution of the first motion.

In addition, time set for the first motion execution process S53 may be longer than time set for the second motion execution process S51. This serves to increase time during which hot air supplied into the drum 3 remains in the drum 3, thereby increasing heat exchange efficiency between laundry and hot air.

Although the control method of the present invention may include only the drying operation S30 and the motion execution operation S50 as described above, the control method may further include cooling water supply operation S70 as exemplarily shown in FIG. 7. The cooling water supply operation S70 is implemented to supply water to the inner circumferential surface of the tub 2 during the motion execution operation S50, thereby cooling the inner circumferential surface of the tub 2 exchanged heat with air discharged from the drum 3.

The cooling water supply operation S70 according to the present invention may be implemented according to user selection. To this end, the control method of the present invention may further include mode selection operation S10 for setting whether or not to implement the cooling water supply operation S70 prior to initiating the drying operation S30.

In the mode selection operation S10, the user may input a control instruction using the first mode selection part 171 and the second mode selection part 173 provided at the control panel 17.

The first mode selection part 171 is used to select a control method (so-called 'turbo drying mode') for executing the cooling water supply operation S70 during the motion execution operation S50, and the second mode selection part 173 is used to select a control method (so-called 'blow drying mode') for implementing the motion execution operation S50 without the cooling water supply operation S70.

Meanwhile, in the mode selection operation S10, the controller (not shown) selects a first mode including the cooling water supply operation S70 according to the quantity of laundry stored in the drum 3 without input of a user instruction.

In any case, the control method of the present invention includes judging whether or not the first mode is selected upon initiation of the drying operation S30 (S40).

When the first mode is not selected (when the second mode is selected), the control method of the present invention executes only the second motion execution process S51 and the first motion execution process S53 in sequence. However, when the first mode is selected, the control method of the present invention executes the cooling water supply operation S70 during the first motion execution process S53.

Heat exchange efficiency between laundry and hot air is low at the initial stage of the drying operation S30. Dryness of laundry has substantially no variation until the laundry reaches a given temperature and is rapidly increased from a point in time when the laundry reaches the given temperature.

This is because moisture contained in laundry is not evaporated until the laundry reaches a given temperature. Such rapid increase in the dryness of laundry means that the humidity of air discharged from the drum 3 is increased as the drying operation S30 is implemented.

Accordingly, in terms of drying of laundry, cooling the tub 2 during the first motion execution process S53, which is initiated when a given time has passed after initiation of the drying operation S30 (i.e. initiated when the second motion execution process S51 ends), is more advantageous than cooling the tub 2 during the second motion execution process S51 which is initiated upon initiation of the drying operation S30.

Moreover, the cooling water supply operation S70 may be implemented during the process of rotating the drum 3 at the second RPM S533 which is included in the first motion execution process S51.

Thereby, even if water supplied into the tub 2 through the water supply unit 4 unintentionally moves to the drum 3, it is possible to prevent the water from reaching laundry in the drum 3 (this is because high RPM of the drum 3 causes water colliding with the outer circumferential surface of the drum 3 to move away from the drum 3).

Thereafter, the control method of the present invention includes judging whether or not time taken for the drying operation S30 and the motion execution operation S50 exceeds drying time set in drying time setting operation S20 (S80), and ends the drying operation S30 and the motion execution operation S50 based on the judged result.

The drying time setting operation S20 may be implemented prior to initiation of the drying operation S30. In the drying time setting operation S20, the controller (not shown) may set drying time based on the quantity of laundry, or the user may input the drying time using the control panel 17.

As is apparent from the above description, the present invention has the effect of providing a laundry treatment apparatus having an advanced concept drying system which may reduce consumption of energy and cooling water required to dry laundry, and a control method thereof.

In addition, the present invention has the effect of providing a laundry treatment apparatus having a drying system which may achieve enhanced drying efficiency, and a control method thereof.

In addition, the present invention has the effect of providing a laundry treatment apparatus having a cooling water supply structure which may prevent cooling water from reaching laundry to be dried, and a control method thereof.

It will be apparent to those skilled in the art that various modifications and variations can be made without departing from the scope of the claims. Thus, it is intended that the present disclosure covers the modifications and variations of this invention provided they come within the scope of the appended claims.

## Claims

1. A method of controlling a laundry treatment apparatus (100) having a tub (2) configured to store wash water, a drum (3) rotatably-mounted in the tub (2) and configured to store laundry, and through-holes (33) perforated in the circumference of the drum (3), the method comprising:
a drying operation (S30),
a motion execution operation (S50) for rotating the drum (3) during implementation of the drying operation (S30), and
a cooling water supply operation (S70) for supplying water to cool an inner circumferential surface of the tub (2) during implementation of the motion execution operation (S50);
wherein the drying operation (S30) includes:
a circulation process (S31) for resupplying air discharged from the tub (2) back into the tub (2),
an exhaust process (S33) for discharging some of the air resupplied back into the tub (2) to outside of the tub (2),
a suction process (S35) for mixing circulated air via the circulation process (S31) with air from outside of the tub (2), and
a heating process (S37) for heating mixed air, the mixed air being acquired via the circulation process (S31) and the suction process (S35);
wherein the air discharged to outside of the tub in the exhaust process moves to the outside of the laundry treating apparatus (100), and
wherein the motion execution operation (S50) includes:
rotating the drum (3) at a first Revolutions Per Minute (RPM) (S531), the first RPM being a number of RPM at which the centrifugal force on the laundry is greater than the weight of laundry; and
rotating the drum (3) at a second RPM (S533), the second RPM being greater than the first RPM.

2. The method according to claim 1, wherein the time spent rotating the drum (3) at the second RPM (S533) is longer than the time spent rotating the drum (3) at the first RPM (S531).

3. The method according to any preceding claim, further comprising repeating, a predetermined number of times or for a predetermined time, rotating the drum (3) at the first RPM (S531) and rotating the drum (3) at the second RPM (S533).

4. The method according to claim 3, wherein the ratio of the time spent rotating the drum (3) at the first RPM (S531) to the time spent rotating the drum (3) at the second RPM (S533) is constant.

5. The method according to any preceding claim, further comprising receiving a user command to supply the water to cool the inner circumferential surface of the tub (2) prior to the drying operation (S30).

6. The method according to any preceding claim, wherein the cooling water supply operation (S70) is only implemented while the drum (3) is rotated at the second RPM.

7. The method according to any preceding claim, further comprising rotating the drum (3) at a third RPM (S511) before rotating the drum (3) at the first RPM and second RPM, wherein the third RPM is a RPM at which the centrifugal force of laundry caused via rotation of the drum (3) is greater than the weight of laundry; and
stopping rotation of the drum (3) at the third RPM (S513) before the drum (3) completes 1 revolution.

8. The method according to claim 7, wherein the process of stopping rotation of the drum (3) at the third RPM (S513) is initiated when laundry is above half a height of the drum (3) or more.

9. The method according to claim 7 or 8, wherein the process of stopping rotation of the drum (3) is implemented when laundry has rotated by an angle of 90 degrees or more and less than 180 degrees on the basis of the lowermost point of the rotation track of the drum (3).

## Patentansprüche

1. Verfahren zum Steuern einer Wäschebehandlungsvorrichtung (100), die einen Bottich (2), der zum Aufnehmen von Waschwasser ausgelegt ist, eine Trommel (3), die drehbar in dem Bottich (2) angebracht und zum Aufnehmen von Wäsche ausgelegt ist, und Durchgangslöcher (33), die in die Umfangsfläche der Trommel (3) gestanzt sind, aufweist, wobei das Verfahren Folgendes aufweist:
einen Trocknungsvorgang (S30),
einen Bewegungsausführungsvorgang (S50) zum Drehen der Trommel (3) während der Implementierung des Trocknungsvorgangs (S30), und
einen Kühlwasserzulaufvorgang (S70) zum Zuleiten von Wasser zum Abkühlen einer Innenumfangsfläche des Bottichs (2) während der Implementierung des Bewegungsausführungsvorgangs (S50) ;
wobei der Trocknungsvorgang (S30) Folgendes aufweist:
einen Zirkulationsvorgang (S31) zum Wiederzuleiten von Luft, die aus dem Bottich (2) abgeblasen wurde, zurück in den Bottich (2),
einen Entlüftungsvorgang (S33) zum Abblasen eines Teils der Luft, die wieder zurück in den Bottich (2) geleitet wurde, aus dem Bottich (2),
einen Ansaugvorgang (S35) zum Mischen von Zirkulationsluft aus dem Zirkulationsvorgang (S31) mit Luft von außerhalb des Bottichs (2), und
einen Erwärmungsvorgang (S37) zum Erwärmen der Mischluft, wobei die Mischluft aus dem Zirkulationsvorgang (S31) und dem Ansaugvorgang (S35) erhalten wird;
wobei sich die Luft, die in dem Entlüftungsvorgang aus dem Bottich abgeblasen wird, zur Außenseite der Wäschebehandlungsvorrichtung (100) bewegt, und
wobei der Bewegungsausführungsvorgang (S50) Folgendes aufweist:
Drehen der Trommel (3) mit ersten Umdrehungen pro Minute (U/min) (S531), wobei die ersten U/min eine Anzahl an U/min sind, bei der die Zentrifugalkraft der Wäsche größer als das Gewicht der Wäsche ist; und
Drehen der Trommel (3) mit zweiten U/min (S533), wobei die zweiten U/min höher als die ersten U/min sind.

2. Verfahren nach Anspruch 1, wobei die Zeit, die die Trommel (3) mit den zweiten U/min (S533) gedreht wird, länger ist als die Zeit, die die Trommel (3) mit den ersten U/min (S531) gedreht wird.

3. Verfahren nach einem der vorhergehenden Ansprüche, das ferner das Wiederholen des Drehens der Trommel (3) mit den ersten U/min (S531) und des Drehens der Trommel (3) mit den zweiten U/min (S533) eine vorbestimmte Anzahl von Malen oder über eine vorbestimmte Zeit lang, aufweist.

4. Verfahren nach Anspruch 3, wobei das Verhältnis der Zeit, die die Trommel (3) mit den ersten U/min (S531) gedreht wird, zu der Zeit, die die Trommel (3) mit den zweiten U/min (S533) gedreht wird, konstant ist.

5. Verfahren nach einem der vorhergehenden Ansprüche, das ferner das Empfangen eines Benutzerbefehls zum Zuleiten des Wassers zum Abkühlen der Innenumfangsfläche des Bottichs (2) vor dem Trocknungsvorgang (S30) aufweist.

6. Verfahren nach einem der vorhergehenden Ansprüche, wobei der Kühlwasserzulaufvorgang (S70) nur bei Drehung der Trommel (3) mit den zweiten U/min durchgeführt wird.

7. Verfahren nach einem der vorhergehenden Ansprüche, das ferner das Drehen der Trommel (3) mit dritten U/min (S511) vor dem Drehen der Trommel (3) mit den ersten U/min und den zweiten U/min aufweist, wobei die dritten U/min eine Anzahl an U/min sind, bei der die Zentrifugalkraft der Wäsche, die durch das Drehen der Trommel (3) entsteht, größer als das Gewicht der Wäsche ist; und
das Anhalten der Drehung der Trommel (3) mit den dritten U/min (S513) bevor die Trommel (3) 1 Umdrehung vollständig durchführt.

8. Verfahren nach Anspruch 7, wobei das Verfahren des Anhaltens der Drehung der Trommel (3) mit den dritten U/min (S513) eingeleitet wird, wenn sich die Wäsche über der halben Höhe oder mehr der Trommel (3) befindet.

9. Verfahren nach einem der Ansprüche 7 oder 8, wobei das Verfahren des Anhaltens der Drehung der Trommel (3) durchgeführt wird, wenn sich die Wäsche um einen Winkel von 90 Grad oder mehr und weniger als 180 Grad, basierend auf dem untersten Punkt der Rotationsbahn der Trommel (3), gedreht hat.

## Revendications

1. Procédé de commande d'un appareil de traitement de linge (100) comportant un bac (2) configuré pour stocker de l'eau de lavage, un tambour (3) monté de façon à pouvoir tourner dans le bac (2) et configuré pour stocker du linge, et des trous traversants (33) perforés dans la circonférence du tambour (3), le procédé comprenant :
une opération de séchage (S30),
une opération d'exécution de mouvement (S50) pour faire tourner le tambour (3) durant l'exécution de l'opération de séchage (S30), et
une opération d'approvisionnement en eau de refroidissement (S70) pour fournir de l'eau servant à refroidir une surface circonférentielle interne du bac (2) durant la mise en oeuvre de l'opération d'exécution de mouvement (S50) ;
dans lequel l'opération de séchage (S30) comprend :
un processus de circulation (S31) pour réintroduire l'air évacué du bac (2) dans le bac (2),
un processus d'échappement (S33) pour évacuer une partie de l'air réintroduit dans le bac (2) à l'extérieur du bac (2),
un processus d'aspiration (S35) pour mélanger l'air que fait circuler le processus de circulation (S31) avec de l'air provenant de l'extérieur du bac (2), et
un processus de chauffage (S37) pour chauffer l'air mélangé, l'air mélangé étant issu du processus de circulation (S31) et du processus d'aspiration (S35) ;
dans lequel l'air évacué à l'extérieur du bac dans le processus d'échappement parvient à l'extérieur de l'appareil de traitement de linge (100), et
dans lequel l'opération d'exécution de mouvement (S50) comprend :
une rotation du tambour (3) à un premier nombre de tours par minute (trs/min) (S531), le premier nombre de trs/min étant un nombre de trs/min auquel la force centrifuge appliquée au linge est supérieure au poids du linge ; et
une rotation du tambour (3) à un deuxième nombre de tours par minute (S533), le deuxième nombre de trs/min étant supérieur au premier nombre de trs/min.

2. Procédé selon la revendication 1, dans lequel la durée de rotation du tambour (3) au deuxième nombre de trs/min (S533) est supérieure à la durée de rotation du tambour (3) au premier nombre de trs/min (S531).

3. Procédé selon l'une quelconque des revendications précédentes, comprenant en outre une répétition, un nombre de fois prédéterminé ou durant un temps prédéterminé, de la rotation du tambour (3) au premier nombre de trs/min (S531) et de la rotation du tambour (3) au deuxième nombre de trs/min (S533).

4. Procédé selon la revendication 3, dans lequel le rapport de la durée de rotation du tambour (3) au premier nombre de trs/min (S531) contre la durée de rotation du tambour (3) au deuxième nombre de trs/min (S533) est constant.

5. Procédé selon l'une quelconque des revendications précédentes, comprenant en outre la réception d'une commande d'un utilisateur demandant que l'eau de refroidissement de la surface circonférentielle interne du bac (2) soit fournie avant l'opération de séchage (S30).

6. Procédé selon l'une quelconque des revendications précédentes, dans lequel l'opération d'approvisionnement en eau de refroidissement (S70) est mise en oeuvre seulement lorsque le tambour (3) tourne au deuxième nombre de trs/min.

7. Procédé selon l'une quelconque des revendications précédentes, comprenant en outre une rotation du tambour (3) à un troisième nombre de trs/min (S511) avant la rotation du tambour (3) au premier nombre de trs/min et au deuxième nombre de trs/min, dans lequel le troisième nombre de trs/min est un nombre de trs/min auquel la force centrifuge appliquée au linge par la rotation du tambour (3) est supérieure au poids du linge ; et
une cessation de la rotation du tambour (3) au troisième nombre de trs/min (S513) avant que le tambour (3) n'ait effectué un tour complet.

8. Procédé selon la revendication 7, dans lequel le processus de cessation de la rotation du tambour (3) au troisième nombre de trs/min (S513) est déclenché quand le linge se trouve au-dessus de la moitié d'une hauteur du tambour (3) ou plus haut.

9. Procédé selon la revendication 7 ou 8, dans lequel le processus de cessation de la rotation du tambour (3) est mis en oeuvre quand le linge a tourné sur un angle de 90 degrés ou plus et de moins de 180 degrés par rapport au point le plus bas du parcours de rotation du tambour (3).
